# EUROPÄISCHE PATENTSCHRIFT

(11) **EP 3 584 512 B1**
(45) Veröffentlichungstag und Bekanntmachung des Hinweises auf die Patenterteilung: **25.10.2023**
(21) Anmeldenummer: 18178625.2
(22) Anmeldetag: 19.06.2018
(51) Int. Cl.: F25B 1/00, F25B 5/02, F25B 41/385

(54) **PRÜFKAMMER UND VERFAHREN**
TEST CHAMBER AND METHOD
CHAMBRE D'ESSAI ET PROCÉDÉ

(43) Veröffentlichungstag der Anmeldung: 25.12.2019
(73) Patentinhaber: Weiss Technik GmbH, 35447 Reiskirchen (DE)
(72) Erfinder: HAACK, Christian, 35037 Marburg (DE); STROH, Björn, 35329 Gemünden (DE); REUSCHEL, Dennis, 35396 Gießen (DE)
(74) Vertreter: advotec.

(56) Entgegenhaltungen:
- EP-A1- 3 273 181
- WO-A1-2017/178275
- US-B1- 6 460 355

## Beschreibung

Die Erfindung betrifft eine Prüfkammer und ein Verfahren zur Konditionierung von Luft, umfassend einen gegenüber einer Umgebung verschließbaren und temperaturgedämmten Prüfraum zur Aufnahme von Prüfgut, und eine Temperiervorrichtung zur Temperierung des Prüfraums, wobei mittels der Temperiervorrichtung eine Temperatur in einem Temperaturbereich innerhalb des Prüfraums ausbildbar ist, wobei die Temperiervorrichtung eine Kühleinrichtung mit einem Kühlkreislauf mit einem Kältemittel, einem Wärmeübertrager, einem Verdichter, einem Kondensator und einem Expansionsorgan aufweist, wobei der Kühlkreislauf eine interne Speichereinrichtung aufweist, wobei die interne Speichereinrichtung über einen Bypass des Kühlkreislaufs an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager angeschlossen ist, wobei mittels der internen Speichereinrichtung thermische Energie speicherbar und mit dem Kältemittel austauschbar ist, wobei die interne Speichereinrichtung aus einem internen Wärmeübertrager und einem regelbaren zweiten Expansionsorgan ausgebildet ist, wobei das zweite Expansionsorgan zwischen der Hochdruckseite und dem internen Wärmeübertrager in dem Bypass angeordnet ist.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -20 °C bis +180 °C eingestellt werden können. Bei Klimaprüfschränken können ergänzend gewünschte Klimabedingungen eingestellt werden, denen dann die Vorrichtung beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal beziehungsweise den Prüfraum durchströmenden Luft angeordnet sind. Dabei saugt ein Lüfter beziehungsweise ein Ventilator die im Prüfraum befindliche Luft an und leitet sie im Umluftkanal zu den jeweiligen Wärmetauschern oder umgekehrt. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wiederholt wechseln. Eine derartige Prüfkammer ist beispielsweise aus der EP 0 344 397 A2 bekannt.

Aufgrund der hohen Anforderungen an eine Temperaturregelung innerhalb des Temperaturbereichs des Prüfraums kommt es während eines Betriebs der Prüfkammer regelmäßig zu Schwankungen in einer Lastanforderung. Eine vom Verdichter und Expansionsorgan erzeugte Kälteleistung muss daher stufenlos regelbar sein. Gleichwohl ist es wünschenswert, dass der Verdichter, wenn es sich um einen beispielsweise Kompressor handelt, nicht allzu häufig ein- und ausgeschaltet wird, um eine Lebensdauer des Verdichters zu verlängern. Diese Anforderung wird regelmäßig dadurch gelöst, dass zwischen einer Hochdruckseite und einer Niederdruckseite des Kühlkreislaufs ein Bypass mit einem regelbaren Expansionsorgan ausgebildet ist, über den dann Kälteleistung am Wärmeübertrager vorbei rückgeführt werden kann. Bei dieser bedarfsgerechten Verteilung eines vom Verdichter bewirkten Massenstroms im Kühlkreislauf können an dem Wärmeübertrager auch geringe Temperaturdifferenzen zwischen einer Ist-Temperatur und einer Soll-Temperatur ausgeglichen werden, ohne dass es zu ungünstigen Lastfällen an dem Verdichter kommt. Nachteilig ist hier jedoch, dass bei einem Vorliegen einer geringen Temperaturdifferenz am Wärmeübertrager stets immer ein Betrieb des Verdichters erforderlich ist, unabhängig davon, wie groß die von der Kühleinrichtung auszugleichende Temperaturdifferenz ist. Bei beispielsweise einer Kühlanforderung von < 1 % einer Gesamtleistung muss bereits die volle Kälteleistung des Verdichters bereitgestellt werden, um die angeforderte Soll-Temperatur am Wärmeübertrager halten zu können. Ein Großteil der Kälteleistung wird dann über den Bypass zum Verdichter zurückgeführt. Da ein fortwährendes An- und Ausschalten des Verdichters nicht möglich ist und auch gegebenenfalls am Kondensator ein Lüfter betrieben werden muss, resultiert aus der hier beschriebenen bekannten Betriebsweise ein vergleichsweise hoher Energieverbrauch der Kühleinrichtung auch bei sehr geringen, auszugleichenden Temperaturdifferenzen.

Die US 6,460,355 B1, die der Oberbegriff der unabhängigen Ansprüche darstellt, beschreibt eine Prüfkammer mit einem Prüfraum zur Konditionierung von Luft. Eine Temperiervorrichtung umfasst zwei Kühlkreisläufe, einen ersten Kühlkreislauf mit einem ersten Kompressor und einen zweiten Kühlkreislauf mit einem zweiten Kompressor. Der erste Kühlkreislauf umfasst weiter einen Kondensator, ein Expansionsventil und einen Wärmeübertrager. Weiter ist an dem ersten Kühlkreislauf ein erster Bypass mit einem Expansionsventil und ein zweiter Bypass mit einem weiteren Expansionsventil vorgesehen. Nachfolgend dem Expansionsventil ist ein Wärmeübertrager angeordnet, der als Speichereinrichtung für thermische Energie dienen kann. Über einen dritten Bypass kann die Speichereinrichtung mit dem Kältemittel durchströmt werden. Die Speichereinrichtung ist an einer Hochdruckseite und einer Niederdruckseite des ersten Kühlkreislaufs angeschlossen.

Aus der WO 2017/178275 A1 ist eine Temperiervorrichtung für beispielsweise Klimaanlagen bekannt. Dabei ist ein Kühlkreislauf der Temperiervorrichtung aus einem Kompressor, einem Kondensator, einem Expansionsventil und einem Kondensator ausgebildet. An einem Abzweig ist an einer Hochdruckseite des Kühlkreislaufs ein Bypass angeschlossen, über den Kältemittel auf eine Niederdruckseite geleitet werden kann. In dem Bypass ist eine interne Speichereinrichtung für thermische Energie angeordnet. Mit der Speichereinrichtung soll es ermöglicht werden, den Kompressor weiter zu betreiben, ohne dass Kältemittel über den Wärmeübertrager geleitet wird. Dadurch soll ein Vereisen des Wärmeübertragers, dadurch dass der Kompressor stetig betrieben wird, verhindert werden.

Die EP 3 273 181 A1 offenbart eine Temperiervorrichtung bzw. einen Kühlkreislauf zur Klimatisierung eines Fahrzeugs. Der Kühlkreislauf weist einen Kompressor, einen Kondensator, ein Expansionsventil und einen Wärmeübertrager auf. Weiter ist ein Bypass an einem Abzweig auf einer Hochdruckseite angeschlossen, wobei in dem Bypass ein Expansionsventil und eine interne Speichereinrichtung angeordnet sind. Der Bypass ist weiter an eine Niederdruckseite, vor dem Kompressor angeschlossen. Die interne Speichereinrichtung soll insbesondere zur Rückgewinnung thermischer Energie genutzt werden. Dazu kann beispielsweise das Kältemittel vor dem Kondensator über die interne Speichereinrichtung zu dem Expansionsventil geleitet werden.

Der vorliegenden Erfindung liegt daher die Aufgabe zugrunde, eine Prüfkammer und ein Verfahren zur Konditionierung von Luft in einem Prüfraum einer Prüfkammer vorzuschlagen, mit der beziehungsweise dem die Prüfkammer energiesparend betrieben werden kann.

Diese Aufgabe wird durch eine Prüfkammer mit den Merkmalen des Anspruchs 1 und ein Verfahren mit den Merkmalen des Anspruchs 10 gelöst.

Die erfindungsgemäße Prüfkammer zur Konditionierung von Luft umfasst einen gegenüber einer Umgebung verschließbaren temperaturgedämmten Prüfraum zur Aufnahme von Prüfgut, und eine Temperiervorrichtung zur Temperierung des Prüfguts, wobei mittels der Temperiervorrichtung eine Temperatur in einem Temperaturbereich von -20 °C bis +180 °C innerhalb des Prüfraums ausbildbar ist, wobei die Temperiervorrichtung eine Kühleinrichtung mit einem Kühlkreislauf mit einem Kältemittel, einem Wärmeübertrager, einem Verdichter, einem Kondensator und einem Expansionsorgan aufweist, wobei der Kühlkreislauf eine interne Speichereinrichtung aufweist, wobei die interne Speichereinrichtung über einen Bypass des Kühlkreislaufs an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager angeschlossen ist, wobei mittels der internen Speichereinrichtung thermische Energie speicherbar und mit dem Kältemittel austauschbar ist, wobei die interne Speichereinrichtung aus einem internen Wärmeübertrager und einem regelbaren zweiten Expansionsorgan ausgebildet ist, wobei das zweite Expansionsorgan zwischen der Hochdruckseite und dem internen Wärmeübertrager in dem Bypass angeordnet ist, wobei in dem Kühlkreislauf ein zweiter Bypass mit zumindest einem regelbaren dritten Expansionsorgan ausgebildet ist, wobei der zweite Bypass an der Hochdruckseite in der Strömungsrichtung vor dem Expansionsorgan und nachfolgend dem Kondensator, und an der Niederdruckseite in der Strömungsrichtung vor dem Verdichter und nachfolgend dem Wärmeübertrager angeschlossen ist, wobei von dem dritten Expansionsorgan der Niederdruckseite Kältemittel zuführbar ist, wobei der zweite Bypass und das dritte Expansionsorgan eine regelbare interne Ergänzungskühlung ausbilden.

Unter thermischer Energie wird hier die Wärmeenergie oder auch der Wärmeinhalt in Joule verstanden, wobei eine Zufuhr von Wärme eine thermische Energie steigert und eine Abfuhr von Wärme diese vermindert. So kann bei der Erfindung die interne Speichereinrichtung auch thermische Energie in der Art speichern, dass durch eine Abfuhr von Wärme Kälteleistung speicherbar ist.

Bei der erfindungsgemäßen Prüfkammer wird durch eine Temperaturisolierung von Seitenwänden, Bodenwänden und Deckenwänden ein Wärmeaustausch mit einer Umgebung des Prüfraums weitgehend vermieden. Der Wärmeübertrager ist an den Kühlkreislauf angeschlossen beziehungsweise in diesen integriert, sodass das im Kühlkreislauf zirkulierende Kältemittel durch den Wärmeübertrager strömt. Der Wärmeübertrager des Kühlkreislaufs kann innerhalb des Prüfraums beziehungsweise in einem Luftbehandlungsraum des Prüfraums angeordnet sein oder alternativ auch an einem weiteren Kühlkreislauf der Kühleinrichtung gekoppelt sein, wenn die Kühleinrichtung zwei kaskadierte Kühlkreisläufe aufweist. Der Wärmeübertrager dient dann als ein Kondensator für den weiteren Kühlkreislauf. Die Kühleinrichtung weist weiter den Verdichter, welcher beispielsweise ein Kompressor sein kann, sowie den in Strömungsrichtung des Kältemittels dem Verdichter nachfolgend angeordneten Kondensator für das verdichtete Kältemittel auf. Das verdichtete Kältemittel, welches nach der Verdichtung unter einem hohen Druck steht und im Wesentlichen gasförmig vorliegt, kondensiert im Kondensator und liegt dann im Wesentlichen in einem flüssigen Aggregatzustand vor. Das flüssige Kältemittel strömt weiter über das Expansionsorgan, wobei es durch Expansion infolge eines Druckabfalls wiederum gasförmig wird. Dabei durchströmt es den Wärmeübertrager, der dadurch gekühlt wird. Nachfolgend wird das gasförmige Kältemittel wieder vom Verdichter angesaugt und verdichtet. Unter einem Expansionsorgan wird zumindest ein Expansionsventil, Drosselorgan, Drosselventil oder eine andere, geeignete Verengung einer Fluidleitung verstanden.

Bei der vorliegenden Erfindung ist vorgesehen, die interne Speichereinrichtung über den Bypass zwischen der Hochdruckseite und der Niederdruckseite in einer Strömungsrichtung vor dem Expansionsorgan und nachfolgend dem Kondensator und vor dem Verdichter und nachfolgend dem Wärmeübertrager anzuschließen beziehungsweise in den Kühlkreislauf zu integrieren. Für den Fall, dass an dem Wärmeübertrager nur eine geringe Kälteleistung benötigt wird, kann das Kältemittel beziehungsweise der betreffende Massestrom an verdichtetem Kältemittel von der Hochdruckseite in die interne Speichereinrichtung umgeleitet und dem Verdichter erneut zugeführt werden. Die dem verdichteten Kältemittel der Hochdruckseite innenwohnende thermische Energie kann dabei an die interne Speichereinrichtung abgegeben werden beziehungsweise der internen Speichereinrichtung kann thermische Energie entzogen werden, derart, dass Kälteleistung in der internen Speichereinrichtung gespeichert wird. Demnach kann die interne Speichereinrichtung anstelle des Wärmeübertragers gekühlt beziehungsweise mit Kälteleistung versorgt werden. Diese Kälteleistung kann dann auf umgekehrten Weg wieder in die Niederdruckseite mittels des Kältemittels zurückgeführt werden, was ein frühzeitiges Abschalten des Verdichters möglich macht. Wird der Verdichter abgeschaltet, kann auf der Niederdruckseite in Strömungsrichtung vor dem Verdichter befindliches gasförmiges Kältemittel über den Bypass und die interne Speichereinrichtung strömen, wobei in der internen Speichereinrichtung das Kältemittel aufgrund der dort gespeicherten Kälteleistung beziehungsweise niedrigen thermischen Energie kondensiert werden kann. Durch die durch die Kondensation erhöhte Dichte des Kältemittels fällt ein Druck auf der Niederdruckseite des Kühlkreislaufs. Da sich nach dem Abschalten des Verdichters ein Kondensationsdruck des Expansionsorgans nur unwesentlich geändert hat, besteht weiterhin eine Druckdifferenz am Expansionsorgan, welche zur Kühlung des Wärmeübertragers genutzt werden kann. Wesentlich ist, dass so ein frühzeitiges Abschalten des Verdichters und gegebenenfalls eines Lüfters möglich wird, wobei dennoch über einen gewissen Zeitraum eine Soll-Temperatur am Wärmeübertrager aufrecht gehalten beziehungsweise eine Temperaturdifferenz ausgeglichen werden kann. Die vom Verdichter erzeugte, nicht benötigte Kälteleistung kann in der internen Speichereinrichtung zwischengespeichert und durch die Kondensation des Kältemittels wieder abgegeben werden. Aufgrund der so verringerten Laufzeiten des Verdichters kann die Prüfkammer besonders energiesparend betrieben werden.

Die interne Speichereinrichtung ist erfindungsgemäß aus einem internen Wärmeübertrager und einem regelbaren zweiten Expansionsorgan ausgebildet, wobei das zweite Expansionsorgan zwischen der Hochdruckseite und dem internen Wärmetauscher in dem Bypass angeordnet ist. So wird es dann auch möglich von der Hochdruckseite flüssiges Kältemittel über das zweite Expansionsorgan zu verdampfen, derart, dass das Kältemittel dann bei Bedarf abgeführt und durch Expansion infolge eines Druckabfalls wiederum gasförmig in den internen Wärmeübertrager, der dadurch gekühlt wird, eingeleitet wird. Das aus dem internen Wärmeübertrager ausströmende gasförmige Kältemittel weist dann infolge der im internen Wärmeübertrager abgegebenen Kälteleistung ein höheres Temperaturniveau auf und kann wieder dem Verdichter zugeführt werden.

Der interne Wärmeübertrager kann von einem Plattenwärmetauscher ausgebildet sein, dessen Sekundärseite mit einem Speichermedium gefüllt sein kann. Das Speichermedium kann beispielsweise ein Phasenwechselmaterial (PCM), eine Salzlösung oder auch ein im Temperaturbereich verflüssigbares Gas wie Kohlenstoffdioxid sein. Dabei kann vorgesehen sein, dass die Sekundärseite mit geeigneten Mitteln versehen ist, die einen Druckanstieg oder -abfall durch eine Dichteänderung des Speichermediums ausgleichen können.

In dem Kühlkreislauf ist erfindungsgemäß ein zweiter Bypass mit zumindest einem regelbaren dritten Expansionsorgan ausgebildet, wobei der zweite Bypass an der Hochdruckseite in der Strömungsrichtung vor dem Expansionsorgan und nachfolgend dem Kondensator, und an der Niederdruckseite in der Strömungsrichtung vor dem Verdichter und nachfolgend dem Wärmeübertrager angeschlossen ist, wobei von dem dritten Expansionsorgan der Niederdruckseite Kältemittel zuführbar ist, wobei der zweite Bypass und das dritte Expansionsorgan eine regelbare interne Ergänzungskühlung ausbilden. Über den zweiten Bypass beziehungsweise das dritte Expansionsorgan kann Kältemittel so dosiert werden, dass eine Sauggastemperatur und/oder ein Sauggasdruck des Kältemittels auf einer Niederdruckseite des Kühlkreislaufs vor dem Verdichter geregelt werden kann. Dadurch kann unter anderem verhindert werden, dass der Verdichter, bei dem es sich beispielsweise um einen Kompressor handeln kann, eventuell überhitzt und damit beschädigt wird. Folglich kann über den zweiten Bypass durch Betätigung des dritten Expansionsorgans vor dem Verdichter befindliches gasförmiges Kältemittel durch Zudosieren von noch flüssigem Kältemittel gekühlt werden. Eine Betätigung des dritten Expansionsorgans kann durch eine Regeleinrichtung erfolgen, die ihrerseits mit einem Druck und/oder Temperatursensor in dem Kühlkreislauf vor dem Verdichter gekoppelt ist. Besonders vorteilhaft ist es, wenn über den zweiten Bypass eine Sauggastemperatur von ≤ 30 °C, vorzugsweise ≤ 40 °C, eingestellt werden kann. Über den zweiten Bypass kann Kältemittel an der internen Speichereinrichtung vorbeigeführt werden, um beispielsweise ein automatisches Abschalten des Verdichters zu verzögern oder eine Betriebsdauer des Verdichters zu verlängern. Weiter wird es dann auch möglich die interne Speichereinrichtung dynamisch mit Kältemittel zu versorgen beziehungsweise je nach vorliegendem Lastfall während eines Betriebs des Verdichters dann überschüssiges flüssiges Kältemittel, welches nicht zur Kühlung einer Sauggastemperatur erforderlich ist, in die interne Speichereinrichtung einzuleiten.

In dem Kühlkreislauf kann ein weiterer Bypass mit zumindest einem regelbaren weiteren Expansionsorgan ausgebildet sein, wobei der weitere Bypass an der Hochdruckseite in der Strömungsrichtung nachfolgend dem Verdichter und vor dem Kondensator, und an der Niederdruckseite an der Strömungsrichtung vor dem Verdichter und nachfolgend dem Wärmeübertrager angeschlossen sein kann, wobei von dem weiteren Expansionsorgan der Niederdruckseite Kältemittel zuführbar sein kann, wobei der weitere Bypass und das weitere Expansionsorgan eine Rückeinspritzeinrichtung für Kältemittel ausbilden können. So kann dann heißes, gasförmiges Kältemittel von der Hochdruckseite nachfolgend dem Verdichter wieder zu der Niederdruckseite, vor dem Verdichter zurückgeführt werden. Dabei kann vorgesehen sein, dass der weitere Bypass direkt an den Bypass benachbart der internen Speichereinrichtung angeschlossen ist. Hierdurch kann eine Leistungssteigerung der im internen Wärmeübertrager gespeicherten Kälteleistung beziehungsweise thermischen Energie erzielt werden. Das Kältemittel kann dann nachfolgend dem internen Wärmeübertrager mithilfe des weiteren Bypasses beziehungsweise der Rückeinspritzeinrichtung, die einen sogenannten Heißgas-Bypass ausbilden kann, weiter überhitzt werden, sodass ein überfluteter Betrieb des internen Wärmeübertragers im Regelbetrieb des Verdichters möglich wird, wobei durch diese Erhöhung einer Effizienz der interne Wärmeübertrager beziehungsweise die interne Speichereinrichtung noch schneller abgekühlt werden kann. Dadurch wird es möglich eine Betriebsdauer des Verdichters weiter zu verkürzen.

Gemäß einer alternativen Ausführungsform kann in dem Kühlkreislauf ein weiterer Bypass mit zumindest einem regelbaren weiteren Expansionsorgan ausgebildet sein, wobei der weitere Bypass an der Hochdruckseite in der Strömungsrichtung nachfolgend dem Verdichter und vor dem Kondensator, und an der internen Speichereinrichtung zwischen dem zweiten Expansionsorgan und dem internen Wärmeübertrager angeschlossen sein kann, wobei von dem weiteren Expansionsorgan dem internen Wärmeübertrager Kältemittel zuführbar sein kann, wobei der weitere Bypass und das weitere Expansionsorgan eine Rückeinspritzeinrichtung für Kältemittel ausbilden können. Nach einer Rückkondensation von Kältemittel in dem internen Wärmeübertrager auf der Niederdruckseite muss der Verdichter wieder in Betrieb genommen werden, wenn die Rückkondensation aufgrund einer steigenden Temperatur im internen Wärmeübertrager nicht mehr erfolgen kann. Aufgrund des dann sinkenden Dampfdrucks verdampft das Kältemittel in dem internen Wärmeübertrager und eine Strömungsrichtung des Kältemittels in dem internen Wärmeübertrager ändert sich. Dabei wäre es nachteilig, wenn vom Verdichter im internen Wärmeübertrager rückkondensiertes Kältemittel angesaugt wird. Dies kann dadurch verhindert werden, dass der weitere Bypass beziehungsweise die so ausgebildete Rückeinspritzeinrichtung heißes gasförmiges Kältemittel in den internen Wärmeübertrager einleitet und so eine Vorverdampfung des im internen Wärmeübertrager angesammelten flüssigen Kältemittels ermöglicht.

Besonders vorteilhaft ist es, wenn eine Sauggastemperatur und/oder ein Sauggasdruck des Kältemittels auf der Niederdruckseite des Kühlkreislaufs vor dem Verdichter regelbar ist, und/oder dass eine Druckdifferenz zwischen der Hochdruckseite und der Niederdruckseite des Kühlkreislaufs ausgleichbar ist. Dadurch kann unter anderem verhindert werden, dass der Verdichter, bei dem es sich beispielsweise um einen Kompressor handeln kann, eventuell überhitzt und damit beschädigt wird. Besonders vorteilhaft ist es, wenn eine Sauggastemperatur von ≤ 30 °C, vorzugsweise ≤ 40 °C, eingestellt werden kann. Auch kann das Kältemittel so dosiert werden, dass eine Betriebsdauer des Verdichters regelbar ist. Prinzipiell ist es nachteilig, wenn der Verdichter beziehungsweise Kompressor vielfach eingeschaltet und ausgeschaltet wird. Eine Lebensdauer eines Kompressors kann verlängert werden, wenn dieser längere Zeitabschnitte im Betrieb ist. Gleichwohl ist es dann auch möglich den Kompressor über längere Zeitabschnitte abzuschalten.

Die Temperiervorrichtung kann eine Regelvorrichtung mit zumindest einem Drucksensor und/oder zumindest einem Temperatursensor in dem Kühlkreislauf umfassen, wobei Magnetventile von Expansionsorgane mittels der Regeleinrichtung in Abhängigkeit einer gemessenen Temperatur beziehungsweise eines Drucks betätigbar sein können. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Prüfkammer veranlassen, um die Prüfkammer oder das Prüfgut vor einer Beschädigung durch kritische oder unerwünschte Betriebszustände der Prüfkammer zu schützen.

Wenn das Expansionsorgan als ein Drosselorgan mit einem Magnetventil ausgebildet ist, kann über das Drosselorgan und das Magnetventil Kältemittel dosiert werden. Das Drosselorgan kann dann ein einstellbares Ventil oder eine Kapillare sein, über das mittels des Magnetventils Kältemittel geleitet wird. Das Magnetventil kann seinerseits mittels der Regeleinrichtung betätigt werden.

Mittels der Temperiervorrichtung kann eine Temperatur in einem Temperaturbereich von -40 °C bis +180 °C, vorzugsweise -70 °C bis +180 °C, innerhalb des Prüfraums ausgebildet werden. Wesentlich ist, dass mittels der Temperiervorrichtung eine Temperatur in einem Temperaturbereich von > +60 °C bis +180 °C innerhalb des Prüfraums reduziert werden kann. Das Kältemittel wird im Wärmeübertrager durch die vergleichsweise hohe Temperatur im Prüfraum stark erwärmt, weshalb der Kühlkreislauf hinsichtlich seiner Konstruktion, zumindest auf einer Niederdruckseite des Kühlkreislaufs, an ein in diesem Temperaturbereich erwärmtes Kältemittel technisch angepasst sein kann. Ein derart erwärmtes Kältemittel ist sonst nicht mehr auf der Niederdruckseite des Kühlkreislaufs optimal nutzbar.

In einer Ausführungsform der Prüfkammer kann der Wärmeübertrager in dem Prüfraum angeordnet sein. Auch kann der Wärmeübertrager dann in einem Luftbehandlungsraum des Prüfraums angeordnet sein, sodass von einem Lüfter umgewälzte Luft mit dem Wärmeübertrager in Kontakt gelangen kann. So wird es möglich, eine umgewälzte Luftmenge des Prüfraums mittels der Kühleinrichtung über den Wärmeübertrager im Prüfraum direkt abzukühlen.

So kann die Kühleinrichtung ausschließlich den einen Kühlkreislauf aufweisen. Der einzige Kühlkreislauf der Prüfkammer kann dann direkt an den Prüfraum angeschlossen sein. Auch kann es dann möglich sein, dass eine minimal erreichbare Temperatur in dem Prüfraum nicht niedriger als -20 °C ist.

Die Kühleinrichtung kann zwei in Reihe geschaltete Kreisläufe aufweisen, die eine sogenannte Kältekaskade ausbilden. Beide Kühlkreisläufe können dann auch über jeweils eine interne Speichereinrichtung, wie vorstehend ausgeführt, verfügen.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Erwärmung der im Prüfraum umgewälzten Luft gezielt gesteuert werden können, kann mittels der Temperiervorrichtung dann innerhalb des Prüfraums eine Temperatur in den vorstehend angegebenen Temperaturbereichen ausgebildet werden. Dabei kann unabhängig vom Prüfgut beziehungsweise eines Betriebszustandes des Prüfgutes eine zeitliche Temperaturkonstanz von ±1 K, vorzugsweise ±0,3 K bis ±0,5 K, während eines Prüfintervalls in dem Prüfraum ausgebildet werden. Unter einem Prüfintervall wird hier ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist. Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Bei dem erfindungsgemäßen Verfahren zur Konditionierung von Luft in einem gegenüber einer Umgebung verschließbaren und temperaturgedämmten Prüfraum einer Prüfkammer zur Aufnahme von Prüfgut, wird mittels einer Kühleinrichtung einer Temperiervorrichtung der Prüfkammer, mit einem Kühlkreislauf, mit einem Kältemittel, einem Wärmeübertrager, einem Verdichter, einem Kondensator und einem Expansionsorgan, eine Temperatur in einem Temperaturbereich von -20 °C bis +180 °C innerhalb des Prüfraums ausgebildet, wobei mittels einer internen Speichereinrichtung des Kühlkreislaufs, über einen Bypass des Kühlkreislaufs angeschlossen an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager, thermische Energie gespeichert und mit dem Kältemittel ausgetauscht wird, wobei das Kältemittel von der Hochdruckseite zu der Niederdruckseite über die interne Speichereinrichtung geleitet wird, wobei in einem zweiten Schritt gasförmiges Kältemittel von der Niederdruckseite mittels der internen Speichereinrichtung in flüssiges Kältemittel kondensiert wird, wobei durch die Kondensation des Kältemittels in der internen Speichereinrichtung eine Druckdifferenz zwischen der Niederdruckseite und der Hochdruckseite ausgebildet wird.

Zu den Vorteilen des erfindungsgemäßen Verfahrens wird auf die Vorteilsbeschreibung der erfindungsgemäßen Vorrichtung verwiesen. Insgesamt kann ein thermischer Wirkungsgrad der Kühleinrichtung erhöht werden, wodurch eine wesentliche Energieeinsparung erzielt werden kann. Ohne den Verdichter zu betreiben, kann der Wärmeübertrager über das Expansionsorgan über einen vergleichsweise langen Zeitraum gekühlt werden. Neben einem Abschalten des Verdichters ist es auch möglich weitere Komponenten der Kühleinrichtung, wie beispielsweise einen Lüfter des Kondensators, ebenfalls abzuschalten oder bei einem wassergekühlten Kondensator eine Wasserkühlung abzuschalten. Darüber hinaus ist die Kühleinrichtung mit dem abgeschalteten Verdichter genauer regelbar, da Druck- und Temperaturverhältnisse im Kühlkreislauf nicht von dem Verdichter störend beeinflusst sind.

Erfindungsgemäß wird das Kältemittel von der Hochdruckseite zu der Niederdruckseite über die interne Speichereinrichtung geleitet. Wenn der Verdichter in Betrieb ist, kann das Kältemittel von der Hochdruckseite zu der Niederdruckseite, und wenn der Verdichter außer Betrieb ist, von der Niederdruckseite in die interne Speichereinrichtung strömen. Das Kältemittel kann somit im Bypass die Strömungsrichtung, je nachdem, ob die interne Speichereinrichtung thermische Energie speichert oder abgibt, ändern.

Erfindungsgemäß wird in einem zweiten Schritt gasförmiges Kältemittel von der Niederdruckseite mittels der internen Speichereinrichtung in flüssiges Kältemittel kondensiert. Dies setzt dann voraus, dass die interne Speichereinrichtung so weit gekühlt ist beziehungsweise so wenig thermische Energie gespeichert hat, dass das gasförmige Kältemittel kondensieren kann. Hierbei kann vorgesehen sein, dass die interne Speichereinrichtung gekühlt wird bis eine wesentliche Temperaturdifferenz durch die Kühlung erzielbar ist.

Erfindungsgemäß wird durch die Kondensation des Kältemittels in der internen Speichereinrichtung eine Druckdifferenz zwischen der Niederdruckseite und der Hochdruckseite ausgebildet. Die interne Speichereinrichtung kann dann in Art einer Kältesenke genutzt werden.

In einem ersten Schritt kann flüssiges Kältemittel von der Hochdruckseite mittels der internen Speichereinrichtung in gasförmiges Kältemittel expandiert und auf die Niederdruckseite geleitet werden.

Der Verdichter kann dann so betrieben werden, dass das Kältemittel mittels eines regelbaren zweiten Expansionsorgans verdampft und durch einen internen Wärmeübertrager der internen Speichereinrichtung geleitet wird, wobei thermische Energie von einem Speichermedium des internen Wärmeübertragers an das Kältemittel abgegeben werden kann.

So kann der Verdichter abgeschaltet und das Kältemittel in einen internen Wärmeübertrager der internen Speichereinrichtung geleitet und kondensiert werden, wobei thermische Energie von dem Kältemittel an ein Speichermedium des internen Wärmeübertragers abgegeben werden kann. Durch diesen Austausch thermischer Energie von dem Kältemittel auf das Speichermedium wird das Speichermedium wieder erwärmt und das Kältemittel gekühlt, was zu dessen Kondensation führt. Dieser Vorgang kann so lange durchgeführt werden bis keine Kondensation des Kältemittels im internen Wärmeübertrager aufgrund einer Temperaturdifferenz zwischen Speichermedium und Kältemittel möglich ist, oder der interne Wärmeübertrager mit flüssigen Kältemittel angefüllt ist. Danach kann dann der Verdichter wieder betrieben werden.

Weitere Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer Kühleinrichtung;
- **Fig. 2**: eine schematische Darstellung einer Kühleinrichtung;
- Fig. 3: eine schematische Darstellung einer Ausführungsform einer Kühleinrichtung.

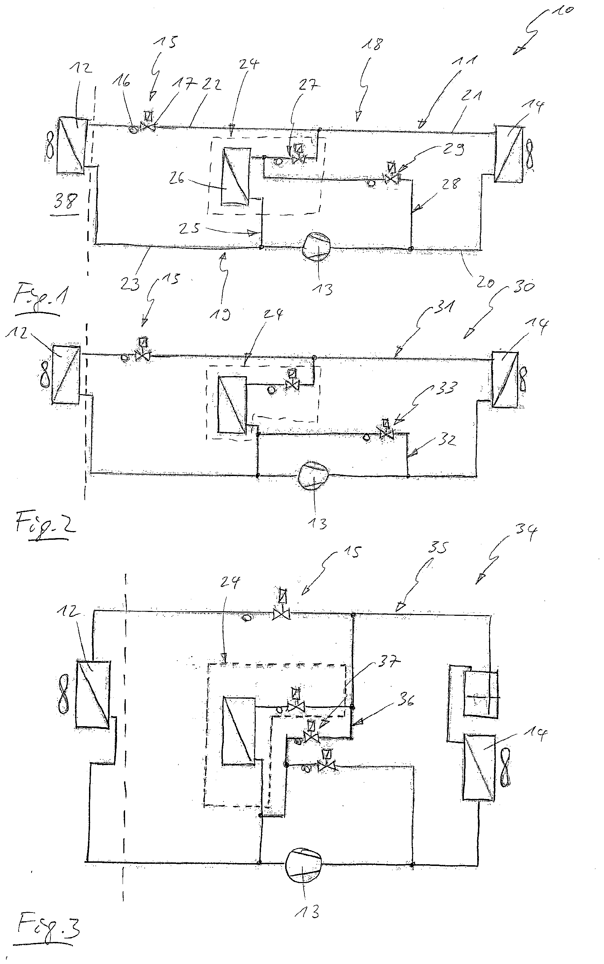

Die **Fig. 1** zeigt eine schematische Darstellung einer Kühleinrichtung 10 mit einem Kühlkreislauf 11, innerhalb dem ein Kältemittel zirkulieren kann. Weiter umfasst die Kühleinrichtung 10 einen Wärmeübertrager 12, der in einem andeutungsweise dargestellten Prüfraum 38 angeordnet oder an einem hier nicht dargestellten weiteren Kühlkreislauf angeschlossen ist, einen Kompressor 13, einen Kondensator 14 und ein Expansionsorgan 15. Das Expansionsorgan 15 ist aus einem Drosselorgan 16 und einem Magnetventil 17 ausgebildet. Der Kühlkreislauf 11 weist eine Hochdruckseite 18, die in Strömungsrichtung des Kältemittels vom Kompressor 13 zum Expansionsorgan 15 verläuft, sowie eine Niederdruckseite 19, die vom Expansionsorgan 15 zum Kompressor 13 verläuft, auf. In einem Rohrabschnitt 20 vom Kompressor 13 zum Kondensator 14 ist das Kältemittel gasförmig und weist eine vergleichsweise hohe Temperatur auf. Das von dem Kompressor 13 verdichtete Kältemittel fließt in dem Kühlkreislauf 11 zu dem Kondensator 14, wobei das gasförmige Kältemittel in dem Kondensator 14 verflüssigt wird. In Strömungsrichtung des Kältemittels folgt im Kühlkreislauf 11 nach dem Kondensator 14 das Expansionsorgan 15, wobei in einem Rohrabschnitt 21 des Kühlkreislaufs 11 zwischen dem Kondensator 14 und dem Expansionsorgan 15 das Kältemittel demnach im flüssigen Aggregatzustand vorliegt. Durch eine Expansion des Kältemittels nachfolgend dem Expansionsorgan 15 erfolgt eine Kühlung des Wärmeübertragers 12, wobei das Kältemittel dann in einem Rohrabschnitt 22 zwischen dem Expansionsorgan 15 und dem Wärmeübertrager 12 in den gasförmigen Aggregatzustand übergeht und über einen Rohrabschnitt 23 vom Wärmeübertrager 12 zu dem Kompressor 13 geleitet wird.

In dem Kühlkreislauf 11 ist weiter eine interne Speichereinrichtung 24 über einen Bypass 25 des Kühlkreislaufs 11 an der Hochdruckseite 18 in einer Strömungsrichtung vor dem Expansionsorgan 15 und nachfolgend dem Kondensator 14 und an der Niederdruckseite 19 in einer Strömungsrichtung vor dem Kompressor 13 und nachfolgend dem Wärmeübertrager 12 angeschlossen. Mittels der internen Speichereinrichtung 24 ist thermische Energie speicherbar und mit dem Kältemittel austauschbar. Die interne Speichereinrichtung 24 ist aus einem internen Wärmeübertrager 26 und einem regelbaren zweiten Expansionsorgan 27 ausgebildet. Das zweite Expansionsorgan 27 ist zwischen der Hochdruckseite 18 und dem internen Wärmeübertrager 26 in dem Bypass 25 angeordnet. Bei einem Betrieb des Kompressors 14 und geringer am Wärmeübertrager 12 benötigter Kälteleistung wird mittels einer hier nicht dargestellten Regeleinrichtung der Prüfkammer das Kältemittel mittels des zweiten Expansionsorgans 27 expandiert und durch den internen Wärmeübertrager 26 der internen Speichereinrichtung 24 geleitet. Der interne Wärmeübertrager 26 weist ein hier nicht dargestelltes Speichermedium auf, das dann thermische Energie an das Kältemittel abgibt, derart, dass das Speichermedium gekühlt wird. Wenn keine wesentliche Temperaturdifferenz beim Kühlen des Speichermediums mehr erzielbar ist, wird der Kompressor 13 abgeschaltet und das Kältemittel in den internen Wärmeübertrager 26 von der Niederdruckseite 19 geleitet. Dabei kondensiert das Kältemittel in dem internen Wärmeübertrager 26, wobei thermische Energie von dem Kältemittel an das Speichermedium abgegeben wird. Dieser Vorgang kann so lange erfolgen bis das Speichermedium soweit erwärmt ist, dass keine Kondensation des Kältemittels erfolgt oder der interne Wärmeübertrager 26 angefüllt ist. Durch die Kondensation und Ansammlung des Kältemittels wird die Dichte des Kältemittels erhöht und ein Druck auf der Niederdruckseite 19 reduziert. Durch diese Reduzierung steht am Expansionsorgan 15 erneut eine Druckdifferenz an, die zur Expansion von Kältemittel über den Wärmeübertrager 12 genutzt werden kann. Nachfolgend kann dann wieder der Kompressor 13 betrieben werden, wobei dann infolge eines verringerten Drucks das Kältemittel in dem internen Wärmeübertrager 26 verdampft.

Weiter ist dem Kühlkreislauf 11 ein weiterer Bypass 28 mit einem regelbaren weiteren Expansionsorgan 29 angeordnet, wobei der weitere Bypass 28 an der Hochdruckseite 18 in der Strömungsrichtung nachfolgend dem Kompressor 13 und vor dem Kondensator 14 und an der internen Speichereinrichtung 24 zwischen dem zweiten Expansionsorgan 27 und dem internen Wärmeübertrager 26 angeschlossen ist. So ist dann von der Hochdruckseite heißes und gasförmiges Kältemittel über das weitere Expansionsorgan 29 in den internen Wärmeübertrager 26 einleitbar. Bei einem Anlaufen des Kompressors 13 kann dann auch verhindert werden, dass in dem internen Wärmeübertrager 26 befindliches flüssiges Kältemittel angesaugt wird, wenn dieses mit dem heißen gasförmigen Kältemittel gemischt wird.

Die **Fig. 2** zeigt eine Kühleinrichtung 30 mit einem Kühlkreislauf 31, wobei die Kühleinrichtung 30 im Unterschied zu der in **Fig. 1** gezeigten Kühleinrichtung der Kühlkreislauf 31 einen weiteren Bypass 32 mit einem regelbaren weiteren Expansionsorgan 33 aufweist, wobei der weitere Bypass 32 an der Hochdruckseite 18 in der Strömungsrichtung nachfolgend dem Kompressor 13 und vor dem Kondensator 14, und an der Niederdruckseite 19 in der Strömungsrichtung vor dem Kompressor 13 und nachfolgend dem Wärmeübertrager 12 angeschlossen ist. Dadurch wird es möglich heißes und gasförmiges Kältemittel von der Hochdruckseite 18 auf die Niederdruckseite 19 vor dem Kompressor 13 zurückzuführen, wodurch eine Sauggastemperatur und/oder ein Sauggasdruck des Kältemittels auf der Niederdruckseite 19 regelbar wird. Weiter kann eine Druckdifferenz zwischen der Hochdruckseite 18 und der Niederdruckseite 19 ausgeglichen werden. Die Regelung der Sauggastemperatur ist insbesondere dann besonders vorteilhaft, wenn über den internen Wärmeübertrager 26 Kältemittel expandiert wird.

Die **Fig. 3** zeigt eine weitere Kühleinrichtung 34 mit einem Kühlkreislauf 35, die im Unterschied zur Kühleinrichtung aus **Fig. 2** einen zweiten Bypass 36 aufweist. Der zweite Bypass 36 ist mit einem regelbaren dritten Expansionsorgan 27 ausgebildet, wobei der zweite Bypass 36 an der Hochdruckseite 18 in der Strömungsrichtung vor dem Expansionsorgan 15 und nachfolgend dem Kondensator 14, und an der Niederdruckseite 19 in der Strömungsrichtung vor dem Kompressor 13 und nachfolgend dem Wärmeübertrager 12 angeschlossen ist. Mittels des dritten Expansionsorgans 37 ist der Niederdruckseite 19 Kältemittel zuführbar, sodass dann auch das Kältemittel expandiert und eine Sauggastemperatur vor dem Kompressor 13 abgesenkt beziehungsweise geregelt werden kann.

## Patentansprüche

1. Prüfkammer zur Konditionierung von Luft, umfassend einen gegenüber einer Umgebung verschließbaren und temperaturgedämmten Prüfraum (38) zur Aufnahme von Prüfgut, und eine Temperiervorrichtung zur Temperierung des Prüfraums, wobei mittels der Temperiervorrichtung eine Temperatur in einem Temperaturbereich innerhalb des Prüfraums ausbildbar ist, wobei die Temperiervorrichtung eine Kühleinrichtung (10, 30, 34) mit einem Kühlkreislauf (11, 31, 35) mit einem Kältemittel, einem Wärmeübertrager (12), einem Verdichter (13), einem Kondensator (14) und einem Expansionsorgan (15) aufweist, wobei der Kühlkreislauf eine interne Speichereinrichtung (24) aufweist, wobei die interne Speichereinrichtung über einen Bypass (25) des Kühlkreislaufs an einer Hochdruckseite (18) des Kühlkreislaufs in einer Strömungsrichtung vor dem Expansionsorgan und nachfolgend dem Kondensator, und an einer Niederdruckseite (19) des Kühlkreislaufs in einer Strömungsrichtung vor dem Verdichter und nachfolgend dem Wärmeübertrager angeschlossen ist, wobei mittels der internen Speichereinrichtung thermische Energie speicherbar und mit dem Kältemittel austauschbar ist, wobei die interne Speichereinrichtung aus einem internen Wärmeübertrager (26) und einem regelbaren zweiten Expansionsorgan (27) ausgebildet ist, wobei das zweite Expansionsorgan zwischen der Hochdruckseite und dem internen Wärmeübertrager in dem Bypass angeordnet ist, **dadurch gekennzeichnet,**
**dass** die Temperatur in einem Temperaturbereich von -20 °C bis +180 °C ausbildbar ist, wobei in dem Kühlkreislauf ein zweiter Bypass (36) mit zumindest einem regelbaren dritten Expansionsorgan (37) ausgebildet ist, wobei der zweite Bypass an der Hochdruckseite in der Strömungsrichtung vor dem Expansionsorgan und nachfolgend dem Kondensator, und an der Niederdruckseite in der Strömungsrichtung vor dem Verdichter und nachfolgend dem Wärmeübertrager angeschlossen ist, wobei von dem dritten Expansionsorgan der Niederdruckseite Kältemittel zuführbar ist, wobei der zweite Bypass und das dritte Expansionsorgan eine regelbare interne Ergänzungskühlung ausbilden.

2. Prüfkammer nach Anspruch 1,
**dadurch gekennzeichnet,**
**dass** in dem Kühlkreislauf (11) ein weiterer Bypass (28) mit zumindest einem regelbaren weiteren Expansionsorgan (27) ausgebildet ist, wobei der weitere Bypass an der Hochdruckseite (18) in der Strömungsrichtung nachfolgend dem Verdichter (13) und vor dem Kondensator (14), und an der Niederdruckseite (19) in der Strömungsrichtung vor dem Verdichter und nachfolgend dem Wärmeübertrager (12) angeschlossen ist, wobei von dem weiteren Expansionsorgan der Niederdruckseite Kältemittel zuführbar ist, wobei der weitere Bypass und das weitere Expansionsorgan eine Rückeinspritzeinrichtung für Kältemittel ausbilden.

3. Prüfkammer nach Anspruch 1 oder 2,
**dadurch gekennzeichnet,**
**dass** in dem Kühlkreislauf (31) ein weiterer Bypass (32) mit zumindest einem regelbaren weiteren Expansionsorgan (33) ausgebildet ist, wobei der weitere Bypass an der Hochdruckseite (18) in der Strömungsrichtung nachfolgend dem Verdichter (13) und vor dem Kondensator (14), und an der internen Speichereinrichtung (24) zwischen dem zweiten Expansionsorgan (27) und dem internen Wärmeübertrager (26) angeschlossen ist, wobei von dem weiteren Expansionsorgan dem internen Wärmeübertrager Kältemittel zuführbar ist, wobei der weitere Bypass und das weitere Expansionsorgan eine Rückeinspritzeinrichtung für Kältemittel ausbilden.

4. Prüfkammer nach einem der vorangehenden Ansprüche,
**dadurch gekennzeichnet,**
**dass** eine Sauggastemperatur und/oder ein Sauggasdruck des Kältemittels auf der Niederdruckseite (19) des Kühlkreislaufs (11, 31, 35) vor dem Verdichter (13) regelbar ist, und/oder dass eine Druckdifferenz zwischen der Hochdruckseite (18) und der Niederdruckseite des Kühlkreislaufs ausgleichbar ist.

5. Prüfkammer nach einem der vorangehenden Ansprüche,
**dadurch gekennzeichnet,**
**dass** die Temperiervorrichtung eine Regeleinrichtung mit zumindest einen Drucksensor und/oder zumindest einen Temperatursensor in dem Kühlkreislauf (11, 31, 35) umfasst, wobei Magnetventile (17) von Expansionsorganen (15, 27, 29, 33, 37) mittels der Regeleinrichtung in Abhängigkeit einer gemessenen Temperatur bzw. eines Drucks betätigbar sind.

6. Prüfkammer nach einem der vorangehenden Ansprüche,
**dadurch gekennzeichnet,**
**dass** mittels der Temperiervorrichtung eine Temperatur in einem Temperaturbereich von -40 °C bis +180 °C, vorzugsweise -70 °C bis +180 °C, innerhalb des Prüfraums (38) ausbildbar ist.

7. Prüfkammer nach einem der vorangehenden Ansprüche,
**dadurch gekennzeichnet,**
**dass** der Wärmeübertrager in dem Prüfraum (38) angeordnet ist.

8. Prüfkammer nach einem der vorangehenden Ansprüche,
**dadurch gekennzeichnet,**
**dass** die Kühleinrichtung (10, 30, 34) ausschließlich den einen Kühlkreislauf aufweist.

9. Prüfkammer nach einem der vorangehenden Ansprüche,
**dadurch gekennzeichnet,**
**dass** die Temperiervorrichtung eine Heizeinrichtung mit einer Heizung und einem Heiz-Wärmeübertrager in dem Prüfraum (38) aufweist.

10. Verfahren zur Konditionierung von Luft in einem gegenüber einer Umgebung verschließbaren und temperaturgedämmten Prüfraum (38) einer Prüfkammer zur Aufnahme von Prüfgut, wobei mittels einer Kühleinrichtung (10, 30, 34) einer Temperiervorrichtung der Prüfkammer, mit einem Kühlkreislauf (11, 31, 35) mit einem Kältemittel, einem Wärmeübertrager (12), einem Verdichter (13), einem Kondensator (14) und einem Expansionsorgan (15), eine Temperatur in einem Temperaturbereich innerhalb des Prüfraums ausgebildet wird, wobei mittels einer internen Speichereinrichtung (24) des Kühlkreislaufs, über einen Bypass (25) des Kühlkreislaufs angeschlossen an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager, thermische Energie gespeichert und mit dem Kältemittel ausgetauscht wird, wobei das Kältemittel von der Hochdruckseite zu der Niederdruckseite über die interne Speichereinrichtung geleitet wird,
**dadurch gekennzeichnet,**
**dass** die Temperatur in einem Temperaturbereich von -20 °C bis +180 °C ausgebildet wird, wobei in einem zweiten Schritt gasförmiges Kältemittel von der Niederdruckseite mittels der internen Speichereinrichtung in flüssiges Kältemittel kondensiert wird, wobei durch die Kondensation des Kältemittels in der internen Speichereinrichtung eine Druckdifferenz zwischen der Niederdruckseite und der Hochdruckseite ausgebildet wird.

11. Verfahren nach Anspruch 10,
**dadurch gekennzeichnet,**
**dass** in einem ersten Schritt flüssiges Kältemittel von der Hochdruckseite (18) mittels der internen Speichereinrichtung (24) in gasförmiges Kältemittel expandiert und auf die Niederdruckseite (19) geleitet wird.

12. Verfahren nach Anspruch 11,
**dadurch gekennzeichnet,**
**dass** der Verdichter (13) betrieben wird und das Kältemittel mittels eines regelbaren zweiten Expansionsorgans (27) verdampft und durch einen internen Wärmeübertrager (26) der internen Speichereinrichtung (24) geleitet wird, wobei thermische Energie von einem Speichermedium des internen Wärmeübertragers an das Kältemittel abgegeben wird.

13. Verfahren nach einem der Ansprüche 10 bis 12,
**dadurch gekennzeichnet,**
**dass** der Verdichter (13) abgeschaltet und das Kältemittel in einen internen Wärmeübertrager (26) der internen Speichereinrichtung (24) geleitet und kondensiert wird, wobei thermische Energie von dem Kältemittel an ein Speichermedium des internen Wärmeübertragers abgegeben wird.

## Claims

1. A test chamber for conditioning air, comprising a test space (38) which serves to receive test material and which can be closed off from the surroundings and which is temperature-insulated, and a temperature control device for controlling the temperature of the test space, the temperature control device allowing a temperature in a temperature range to be established within the test space, the temperature control device having a cooling device (10, 30, 34) comprising a cooling circuit (11, 31, 35) with a refrigerant, a heat exchanger (12), a compressor (13), a condenser (14), and an expansion element (15), the cooling circuit having an internal storage device (24), the internal storage device being connected to a high-pressure side (18) of the cooling circuit upstream of the expansion element and downstream of the condenser in a flow direction and to a low-pressure side (19) of the cooling circuit upstream of the compressor and downstream of the heat exchanger via a bypass (25) of the cooling circuit, thermal energy being stored and exchanged with the refrigerant by means of the internal storage device, the internal storage device being composed of an internal heat exchanger (26) and a controllable second expansion element (27), the second expansion element being disposed between the high-pressure side and the internal heat exchanger in the bypass **characterized in that** the temperature is established in a temperature range from -20 °C to +180° C, a second bypass (36) having at least a controllable third expansion element (37) being formed in the cooling circuit, the second bypass being connected to the high-pressure side upstream of the expansion element and downstream of the condenser in the flow direction and to the low-pressure side upstream of the compressor and downstream of the heat exchanger in the flow direction, refrigerant being supplied to the low-pressure side from the third expansion element, the second bypass and the third expansion element forming a controllable internal additional cooling system.

2. The test chamber according to claim 1,
**characterized in that**
another bypass (28) having at least another controllable expansion element (27) is formed in the cooling circuit (11), the other bypass being connected to the high-pressure side (18) downstream of the compressor (13) and upstream of the condenser (14) in the flow direction and to the low-pressure side (19) upstream of the compressor and downstream of the heat exchanger (12) in the flow direction, refrigerant being supplied to the low-pressure side from the other expansion element, the other bypass and the other expansion element forming a re-injection device for refrigerant.

3. The test chamber according to claim 1 or 2,
**characterized in that**
another bypass (32) having at least another controllable expansion element (33) is formed in the cooling circuit (31), the other bypass being connected to the high-pressure side (18) downstream of the compressor (13) and upstream of the condenser (14) in the flow direction and to the internal storage device (24) between the second expansion element (27) and the internal heat exchanger (26), refrigerant being supplied to the internal heat exchanger from the other expansion element, the other bypass and the other expansion element forming a re-injection device for refrigerant.

4. The test chamber according any one of the preceding claims,
**characterized in that**
a suction gas temperature and/or a suction gas pressure of the refrigerant is controlled upstream of the compressor (13) on the low-pressure side (19) of the cooling circuit (11, 31, 35) and/or **in that** a pressure difference between the high-pressure side (18) and the low-pressure side of the cooling circuit is equalized.

5. The test chamber according to any one of the preceding claims,
**characterized in that**
the temperature control device comprises a control unit having at least a pressure sensor (30) and/or at least a temperature sensor in the cooling circuit (11, 31, 35), magnetic valves (17) of expansion elements (15, 27, 29, 33, 37) being actuated by means of the control unit as a function of a measured temperature and pressure.

6. The test chamber according to any one of the preceding claims,
**characterized in that**
a temperature in a temperature range of -40 °C to +180 °C, preferably -70 °C to +180 °C, is established within the test space (38) by means of the temperature control device.

7. The test chamber according to any one of the preceding claims,
**characterized in that**
the heat exchanger is disposed in the test space (38).

8. The test chamber according to any one of the preceding claims,
**characterized in that**
the cooling device (10, 30, 34) has only the one cooling circuit.

9. The test chamber according to any one of the preceding claims,
**characterized in that**
the temperature control device has a heating device comprising a heater and a heating heat exchanger in the test space (38).

10. A method for conditioning air in a test space (38) of a test chamber which serves to receive test material and which can be closed off from the surroundings and which is temperature-insulated, a temperature being established within the test space by means of a cooling device (10, 30, 34) of a temperature control device of the test chamber comprising a cooling circuit (11, 31, 35) with a refrigerant, a heat exchanger (12), a compressor (13), a condenser (14) and an expansion element (15), thermal energy being stored and exchanged with the refrigerant by means of an internal storage device (24) of the cooling circuit connected to a high-pressure side of the cooling circuit upstream of the expansion element and downstream of the condenser in a flow direction and to a low-pressure side of the cooling circuit upstream of the compressor and downstream of the heat exchanger in a flow direction via a bypass (25) of the cooling circuit, the refrigerant being led from the high-pressure side to the low-pressure side via the internal storage device, the temperature being established in a temperature range of -20 °C to +180 °C, in a second step, gaseous refrigerant from the low-pressure side being condensed into liquid refrigerant by means of the internal storage device, by condensing the refrigerant in the internal storage device, a pressure difference is established between the low-pressure side and the high-pressure side.

11. The method according to claim 10,
**characterized in that**
in a first step, liquid refrigerant from the high-pressure side (18) is expanded into gaseous refrigerant by means of the internal storage device (24) and led to the low-pressure side (19).

12. The method according to claim 11,
**characterized in that**
the compressor (13) is operated and the refrigerant is evaporated by means of a controllable second expansion element (27) and is led through an internal heat exchanger (26) of the internal storage device (24), thermal energy being transferred from a storage fluid of the internal heat exchanger to the refrigerant.

13. The method according to claim 10 to 12,
**characterized in that**
the compressor (13) is switched off and the refrigerant is led into an internal heat exchanger (26) of the internal storage device (24) and condensed, thermal energy being transferred from the refrigerant to a storage fluid of the internal heat exchanger.

## Revendications

1. Chambre d'essai pour le conditionnement de l'air, comprenant un espace d'essai (38) qui sert à la réception du matériau d'essai et qui peut être fermé à l'environnement et qui est isolé à température et un dispositif de contrôle de température pour le contrôle de la température de l'espace d'essai, le dispositif de contrôle de température permettant la génération d'une température dans une plage de température dans l'espace d'essai, le dispositif de contrôle de température ayant un dispositif de refroidissement (10, 30, 34) comprenant un circuit de refroidissement (11, 31, 35) avec un réfrigérant, un échangeur de chaleur (12), un compresseur (13), un condensateur (14) et un élément d'expansion (15), le circuit de refroidissement ayant un dispositif de stockage intérieur (24), le dispositif de stockage intérieur étant relié à un côté à haute pression (18) du circuit de refroidissement en amont de l'élément d'expansion et en aval du condensateur en sens d'écoulement et à un côté à basse pression (19) du circuit de refroidissement en amont du compresseur et en aval de l'échangeur de chaleur par un by-pass (25) du circuit de refroidissement, de l'énergie thermique étant stockée et échangée par le réfrigérant au moyen du dispositif de stockage intérieur, le dispositif de stockage intérieur étant composé par un échangeur de chaleur intérieur (26) et un deuxième élément d'expansion réglable (27), le deuxième élément d'expansion étant disposé dans le by-pass entre le côté à haute pression et l'échangeur de chaleur intérieur
**caractérisé en ce que**
la température est générée dans une plage de température de -20 °C à +180 °C, un deuxième by-pass (36) ayant au moins un troisième élément d'expansion réglable (37) étant formé dans le circuit de refroidissement, le deuxième by-pass étant relié au côté à haute pression en amont de l'élément d'expansion et en aval du condensateur en sens d'écoulement et au côté à basse pression en amont du compresseur et en aval de l'échangeur de chaleur en sens d'écoulement, du réfrigérant étant amené au côté à basse pression par le troisième élément d'expansion, le deuxième by-pass et le troisième élément d'expansion formant un système de refroidissement intérieur réglable additionnel.

2. Chambre d'essai selon la revendication 1,
**caractérisé en ce**
**qu'**un autre by-pass (28) ayant au moins un autre élément d'expansion réglable (27) est formé dans le circuit de refroidissement (11), l'autre by-pass étant relié au côté à haute pression (18) en aval du compresseur (13) et en amont du condensateur (14) en sens d'écoulement et au côté à basse pression (19) en amont du compresseur et en aval de l'échangeur de chaleur (12) en sens d'écoulement, du réfrigérant étant amené au côté à basse pression par l'autre élément d'expansion, l'autre by-pass et l'autre élément d'expansion formant un dispositif de réinjection pour le réfrigérant.

3. Chambre d'essai selon la revendication 1 ou la revendication 2,
**caractérisé en ce**
**qu'**un autre by-pass (32) ayant au moins un autre élément d'expansion réglable (33) est formé dans le circuit de refroidissement (31), l'autre by-pass étant relié au côté à haute pression (18) en aval du compresseur (13) et en amont du condensateur (14) en sens d'écoulement et au dispositif de stockage intérieur (24) entre le deuxième élément d'expansion (27) et l'échangeur de chaleur intérieur (26), du réfrigérant étant amené à l'échangeur de chaleur intérieur par l'autre élément d'expansion, l'autre by-pass et l'autre élément d'expansion formant un dispositif de réinjection pour le réfrigérant.

4. Chambre d'essai selon l'une quelconque des revendications précédentes,
**caractérisé en ce**
**qu'**une température de gaz d'aspiration et/ou une pression de gaz d'aspiration du réfrigérant est réglée au côté à basse pression (19) du circuit de refroidissement (11, 31, 35) en amont du compresseur (13) et/ou **en ce qu'**une différence de pression entre le côté à haute pression (18) et le côté à basse pression du circuit de refroidissement peut être égalisée.

5. Chambre d'essai selon l'une quelconque des revendications précédentes,
**caractérisé en ce que**
le dispositif de contrôle de température comprend une unité de contrôle ayant au moins un capteur de pression (30) et/ou au moins un capteur de température dans le circuit de refroidissement (11, 31, 35), des électrovannes (17) d'éléments d'expansion (15, 27, 29, 33, 37) étant actionnées au moyen de l'unité de contrôle en fonction d'une température mesurée et d'une pression.

6. Chambre d'essai selon l'une quelconque des revendications précédentes,
**caractérisé en ce**
**qu'**une température dans une plage de température de -40 °C à +180 °C, de préférence de -70 °C à +180 °C, est générée dans l'espace d'essai (38) au moyen du dispositif de contrôle de température.

7. Chambre d'essai selon l'une quelconque des revendications précédentes,
**caractérisé en ce que**
l'échangeur de chaleur est disposé dans l'espace d'essai (38).

8. Chambre d'essai selon l'une quelconque des revendications précédentes,
**caractérisé en ce que**
le dispositif de refroidissement (10, 30, 34) n'a que le seul circuit de refroidissement.

9. Chambre d'essai selon l'une quelconque des revendications précédentes,
**caractérisé en ce que**
le dispositif de contrôle de température a un dispositif de chaleur comprenant un chauffage et un échangeur de chaleur thermique dans l'espace d'essai (38).

10. Procédé pour le conditionnement de l'air dans un espace d'essai (38) d'une chambre d'essai qui sert à la réception du matériau d'essai et qui peut être fermé à l'environnement et qui est isolé à température, une température étant générée dans une plage de température dans l'espace d'essai au moyen d'un dispositif de refroidissement (10, 30, 34) d'un dispositif de contrôle de température de la chambre d'essai comprenant un circuit de refroidissement (11, 31, 35) avec un réfrigérant, un échangeur de chaleur (12), un compresseur (13), un condensateur (14) et un élément d'expansion (15), de l'énergie thermique étant stockée et échangée par le réfrigérant au moyen d'un dispositif de stockage intérieur (24) du circuit de refroidissement relié au côté à haute pression du circuit de refroidissement en amont de l'élément d'expansion et en aval du condensateur en sens d'écoulement et à un côté à basse pression du circuit de refroidissement en amont du compresseur et en aval de l'échangeur de chaleur en sens d'écoulement par un by-pass (25) du circuit de refroidissement, le réfrigérant étant guidé du côté à haute pression au côté à basse pression par le dispositif de stockage intérieur,
**caractérisé en ce que**
la température étant générée dans une plage de température de -20 °C à +180 °C, du réfrigérant gazeux du côté à basse pression étant condensé en réfrigérant liquide au moyen du dispositif de stockage intérieur dans une deuxième étape, une différence de pression est établie entre le côté à basse pression et le côté à haute pression en condensant le réfrigérant dans le dispositif de stockage intérieur.

11. Procédé selon la revendication 10,
**caractérisé en ce que**
dans une première étape, du réfrigérant liquide du côté à haute pression (18) est expansé en réfrigérant gazeux au moyen du dispositif de stockage intérieur (24) et est guidé au côté à basse pression (19).

12. Procédé selon la revendication 11,
**caractérisé en ce que**
le compresseur (13) est opéré et le réfrigérant évapore au moyen d'un deuxième élément d'expansion réglable (27) et est guidé à travers un échangeur de chaleur intérieur (26) du dispositif de stockage intérieur (24), de l'énergie thermique étant transférée à partir d'un fluide de stockage de l'échangeur de chaleur intérieur au réfrigérant.

13. Procédé selon la revendication 10 à 12,
**caractérisé en ce que**
le compresseur (13) est déconnecté et le réfrigérant est guidé dans un échangeur de chaleur intérieur (26) du dispositif de stockage intérieur (24) et est condensé, de l'énergie thermique étant transférée à partir du réfrigérant à un fluide de stockage de l'échangeur de chaleur intérieur.
